# EUROPÄISCHE PATENTSCHRIFT

(11) **EP 1 907 266 B1**
(45) Veröffentlichungstag und Bekanntmachung des Hinweises auf die Patenterteilung: **02.06.2010**
(21) Anmeldenummer: 06762518.6
(22) Anmeldetag: 11.07.2006
(51) Int. Cl.: B62D 33/067, B62D 21/15

(54) **LASTKRAFTWAGEN MIT KOLLISIONSRÜCKHALTESYSTEM FÜR DAS FAHRERHAUS**
TRUCK COMPRISING A RETAINING SYSTEM FOR THE CAB IN CASE OF A COLLISION
CAMION POURVU D'UN SYSTEME DE RETENUE DE LA CABINE DU CONDUCTEUR EN CAS DE COLLISION

(30) Priorität: 23.07.2005 DE 102005034465
(43) Veröffentlichungstag der Anmeldung: 09.04.2008
(73) Patentinhaber: Daimler AG, 70327 Stuttgart (DE)
(72) Erfinder: MORSCHHEUSER, Kay, 73650 Winterbach (DE); PEDROTTI, Wolfgang, 73760 Ostfildern (DE)
(74) Vertreter: Moore, Derek
(86) Internationale Anmeldenummer: PCT/EP2006/006767
(87) Internationale Veröffentlichungsnummer: WO 2007/012398

(56) Entgegenhaltungen:
- EP-A- 0 584 541
- EP-A- 1 477 391
- PATENT ABSTRACTS OF JAPAN Bd. 1998, Nr. 06, 30. April 1998 (1998-04-30) -& JP 10 045044 A (MITSUBISHI MOTORS CORP), 17. Februar 1998 (1998-02-17)
- PATENT ABSTRACTS OF JAPAN Bd. 006, Nr. 253 (M-178), 11. Dezember 1982 (1982-12-11) -& JP 57 147969 A (TOYO KOGYO KK), 13. September 1982 (1982-09-13)
- PATENT ABSTRACTS OF JAPAN Bd. 1997, Nr. 07, 31. Juli 1997 (1997-07-31) -& JP 09 058531 A (ISUZU MOTORS LTD), 4. März 1997 (1997-03-04)

## Beschreibung

Die Erfindung betrifft einen Lastkraftwagen mit einem Fahrerhaus, welches über eine Fahrerhaus-Lagerung kippbar an einem darunter liegenden Fahrwerk-Chassis angelenkt ist. Das Fahrerhaus kann dadurch für Wartungs- und Reparaturarbeiten im Motorraum nach oben weggeschwenkt werden und ist im normalen Betriebszustand über die Lagerung und Verankerungseinrichtungen sowie Federvorrichtungen mit dem Fahrwerk-Chassis verbunden.

Derartige Lastkraftwagen weisen ein über dem Antriebsstrang relativ hoch liegendes Fahrerhaus auf, bei dem die Gefahr besteht, dass bei einer frontalen Kollision mit einem Hindernis auf Höhe des Fahrerhauses, die Befestigungen des Fahrerhauses reißen und es zu starken Beschädigungen des Fahrerhauses kommt. Dies liegt daran, dass die Anbindungspunkte des Fahrerhauses keine hinreichende Festigkeit zum Widerstehen bei großen Kollisions-Kräften aufweisen. Das Fahrerhaus kann daher im Crashfall erhebliche Verformungen erleiden und wodurch sich insbesondere auch erhebliche Verletzungen der Insassen ergeben. Die Schäden am Lastkraftwagen sind bei einem derartigen frontalen Aufprall beispielsweise mit einem Brückenpfeiler oder einem Anhänger eines vorausfahrenden Lastkraftwagens, so genannter Pritschenaufprall, erheblich und führen häufig zum Totalschaden. Das Fahrerhaus muss sehr große Energien aufnehmen, die nur teilweise in das Fahrwerk-Chassis abgeleitet werden können bevor die Fahrerhaus-Lagerung abreißt. Oft kommt es dabei zu einer völligen Zerstörung des Fahrerhauses.

Insbesondere betrifft die Erfindung einen derartigen Lastkraftwagen mit hoch liegendem Fahrerhaus, der mit einem Kollisions-Rückhaltesystem für das Fahrerhaus versehen ist. Zur Vermeidung der beschriebenen Probleme ist es nämlich bekannt, zusätzlich zu den üblichen Anbindungspunkten des Fahrerhauses im geschlossenen Zustand eine mechanische starre Verankerung zwischen dem Fahrerhaus und dem Fahrwerk-Chassis als zusätzliches Rückhaltesystem vorzusehen. Derartige Zusatzkonstruktionen sind aufgrund des Höhenunterschieds zwischen dem Fahrerhaus und den darunter liegenden festen Bauteilen des Fahrwerk-Chassis aufwändig und in der Regel schwer. Sie erfordern auch auf Grund der Notwendigkeit einer Kippbeweglichkeit des Fahrerhauses und einer relativen Beweglichkeit zur Federung des Fahrerhauses aufwändige Konstruktionen, beispielsweise über Hebelmechaniken, mit einer Vielzahl von einzelnen Bauteilen.

Aus der gattungsgemäßen DE 195 80 267 T1 ist ein Lastkraftwagen mit einem über einem Antriebsstrang kippbar gelagerten Fahrerhaus bekannt, welches mittels einer Lagerung von einem bodenseitigen Fahrwerk-Chassis ausgelenkt ist, wobei der Antriebsstrang an dem Fahrwerk-Chassis befestigt ist. Außerdem ist ein Rückhaltesystem für das Fahrerhaus vorgesehen, welches im Falle von frontalen Kollisionen des Lastkraftwagens mit einem Hindernis auf Höhe des Fahrerhauses zur Aufnahme und Ableitung von Kollisionskräften seitens des Fahrerhauses geeignet ist. Das Rückhaltesystem stellt eine feste Verbindung zwischen dem Fahrerhaus und einem festen Teil des darunter liegenden Antriebsstrangs her. Um einen größtmöglichen Komfort für den Fahrer hinsichtlich einer Federung zu erzielen, ohne dass Schallschwingungen vom Rahmen in das Fahrerhaus übertragen werden, wird eine der Stabilisatorlagerungen am Fahrzeug als Buchse ausgeführt, welche sich in Längs- und Querrichtung weich, hingegen in senkrechter Richtung jedoch starr verhält.

Außerdem wird in der DE 198 02 632 B4 ein Nutzfahrzeug mit einem Fahrzeugrahmen und einem Fahrerhaus, welches am Fahrzeugrahmen vorn um eine Querachse kippbar angelenkt ist, beschrieben. Hinten ist das Fahrerhaus an einem Brückenquerträger abgestützt und verriegelt. Der Brückenquerträger ist in seiner Lage relativ zum Fahrerhaus mittig und symmetrisch angeordnet und dient zur Realisierung einer elastischen Abstützung und zur Verriegelung des Fahrerhauses am Fahrzeugrahmen. Der Brückenquerträger besteht aus einem horizontal angeordneten Quergurt mit vertikal schräg nach unten zum Fahrzeugrahmen verlaufenden Schenkeln, womit er über entsprechende Befestigungselemente an die Rahmenlängsträger montiert ist. Bei einem Frontalaufprall wird das Fahrerhaus nach hinten geschoben, wobei der Brückenquerträger bis hin zum Fahrzeugrahmen ohne Abriss einzelner Elemente verformt werden und dabei wirkungsvoll Energie abbauen kann.

Die vorliegende Erfindung hat demgegenüber als Aufgabe, einen Lastkraftwagen vorzuschlagen, der gegenüber frontalen Kollisionen auf Höhe des Fahrerhauses widerstandsfähiger ist und mit geringem Zusatzaufwand und Kosten realisierbar ist.

Diese Aufgabe wird mit einem Lastkraftwagen mit den Merkmalen des Anspruchs 1 gelöst.

Vorteilhafte Ausgestaltungen und Weiterbildungen sind Gegenstand der abhängigen Ansprüche.

Der erfindungsgemäße Lastkraftwagen weist ein über einem Antriebsstrang kippbar gelagertes Fahrerhaus auf sowie ein Rückhaltesystem für das Fahrerhaus im Falle von frontalen Kollisionen des Lastkraftwagens mit Hindernissen auf Höhe des Fahrerhauses zur Aufnahme und Ableitung von Kollisionskräften, wobei das Rückhaltesystem ein flexibles Kopplungselement umfasst, das zwischen dem Fahrerhaus und einem vorderen festen Teil des darunter liegenden Antriebsstrangs eine entgegen der Fahrtrichtung zugfeste Verbindung herstellt. Das flexible und zugfeste Kopplungselement erlaubt eine effektive mechanische Kopplung zwischen einem festen Teil im vorderen, tief liegenden Bereich des Motorraums mit dem darüber liegenden Fahrerhaus zur Ableitung von Kollisionskräften, ohne dass die Möglichkeit eines Fahrerhauskippens bzw. die erforderliche Eigenbeweglichkeit des Antriebsstrangs und des Fahrerhauses beeinträchtigt werden. Die auf das Fahrerhaus einwirkenden Kräfte werden so auf den Antriebsstrang, d.h. den Antriebsmotor, das Getriebe, die Gelenkwelle und die Hinterradachse weitergeleitet und von diesen aufgenommen. Unter Flexibilität des Kopplungselements wird vorliegend eine Biegefreiheit verstanden, die ein freies Kippen um die Lagerung des Fahrerhauses ermöglicht. Dennoch ist das Kopplungselement im Wesentlichen zugfest, d.h. es ermöglicht eine Übertragung von Zugkräften vom Fahrerhaus auf den Antriebsstrang. Die Belastungen auf das Fahrerhaus können so ohne großen Aufwand von der Fahrerhausstruktur abgenommen werden und auf den Antriebsstrang mit größerer Festigkeit übertragen werden. Auf diese Weise wird auch bei höheren Aufprallgeschwindigkeiten verhindert, dass es zur übermäßigen Beschädigung des Fahrerhauses kommt. Crashsituationen im Bereich höherer Geschwindigkeiten können so besser beherrscht werden. Die Montage und Herstellung des erfindungsgemäßen Rückhaltesystems sind denkbar einfach und es erfordert vergleichsweise wenig Raum. Das flexible, zugfeste Kopplungselement kann hierbei verschiedene Formen und Strukturen aufweisen: Beispielsweise kann das Kopplungselement die Form eines Gurtes, Seiles, Bandes, einer Kette oder ähnlichem aus metallischen oder nicht-metallischen Materialien aufweisen.

Nach einer vorteilhaften Ausgestaltung der Erfindung ist das Kopplungselement an seitlichen Längsträgern des Fahrerhauses bzw. eines Chassis des Fahrerhauses befestigt. Auf diese Weise werden die Kollisionskräfte vom frontalen Bereich des Fahrerhauses direkt in das Kopplungselement eingeleitet auch wenn dieses in einem rückwärtigen Abschnitt des Fahrerhauses befestigt ist. Das Kopplungselement verläuft somit von einem hinteren Befestigungspunkt an den Längsträgern schräg nach vorne und nach unten zur Anbindung an einem feststehenden Teil des Antriebsstrangs. Die in Längsrichtung steifen Seitenlängsträger der Fahrerhausstruktur verhindern eine Verformung des Fahrerhauses im bodenseitigen Bereich und das flexible Kopplungselement kann auf einfache Weise an den Längsträgern befestigt werden. Durch die Befestigung an den Längsträgern des Fahrerhauses sind keine zusätzlichen Befestigungsbauteile an der Karosserie des Fahrerhauses erforderlich.

Nach einer weiteren Ausgestaltung der Erfindung ist das Kopplungselement an einem stirnseitigen Bereich eines Antriebsmotors befestigt. Da der Antriebsmotor regelmäßig die vorderste Komponente eines Antriebsstrangs von Lastkraftwagen bildet, kann so das Kopplungselement möglichst weit im vorderen Bereich befestigt werden und ist somit weniger schräg nach oben zum Fahrerhaus hin ausgerichtet. Das Kopplungselement ist zwischen einem oberen, rückwärtigen Abschnitt des Fahrerhauses und einem vorderen, vorzugsweise stirnseitigen Bereich des Antriebsstrangs befestigt. Dadurch ergibt sich ein schräg von vorne nach hinten aufsteigender Verlauf. Je flacher dieser Verlauf ist, desto wirksamer können Zugkräfte bei Kollisionen aufgenommen werden. Die stirnseitige Befestigung kann beispielsweise durch ein entsprechendes Halteteil realisiert werden, das an der Vorderseite des Antriebsmotors vorbei läuft. Das Kopplungselement bildet so eine Querverbindung an der Vorderseite des Motors, vorzugsweise auf Höhe seiner größten Festigkeit, die eine sehr sichere Verankerung des Fahrerhauses gewährleistet. Eine Befestigung des Kopplungselements am Motor kann beispielsweise auf Höhe des Zylinderkopfes erfolgen, da dieser eine große Eigensteifigkeit aufweist und daher die Aufnahme großer Kräfte im Crashfall erlaubt.

Nach einer weiteren Ausgestaltung der Erfindung ist das flexible Kopplungselement ein U-förmig den Antriebsmotor umschlingendes Halteseil, welches mit seinen Enden an den seitlichen Längsträgern des Chassis des Fahrerhauses befestigt ist. Das flexible Kopplungselement ist auf diese Weise ein einstückiges, durchgehendes Element, welches durch die U-förmige Umschlingung des Antriebsmotors eine sichere Verankerung des Fahrerhauses gegen frontal einwirkende Kräfte gewährleistet. Die Herstellung und Montage des Halteseils sind denkbar einfach. Lediglich die Enden des Halteseils müssen am Fahrerhaus befestigt werden und an der Vorderseite des Motors eine Halterung für das durchgehende Seil vorgesehen werden. Dadurch wird gleichermaßen eine Querverbindung vor dem Motor wie auch eine Überbrückung des Höhenunterschieds zwischen der Ebene des Fahrerhauses und der Ebene des Antriebsstrangs durch ein einziges Bauteil, nämlich dem Halteseil, bereitgestellt. Es müssen auch keine größeren Veränderungen an bestehenden Konstruktionen vorgenommen werden, da sich das flexible Halteseil in seinem Verlauf den jeweiligen räumlichen Gegebenheiten anpasst. Nach einer weiteren Ausgestaltung der Erfindung ist das Kopplungselement auf Seiten des Antriebsstrangs mittels einer Führung drehbeweglich und unverlierbar befestigt. Hierdurch wird die Kippbewegung des Fahrerhauses nicht behindert und das Kopplungselement bleibt auch in losem, ungespanntem Zustand an einer vordefinierten Stelle im Frontbereich des Antriebsstrangs befestigt. Ein Verrutschen des Kopplungselements wird verhindert, so dass es sich immer in der für den Crash-Fall optimalen Lage befindet, insbesondere im Bereich hoher Festigkeit des Antriebsstrangs, wie zum Beispiel auf Höhe des Zylinderkopfes des Motors.

Nach einer weiteren vorteilhaften Ausgestaltung der Erfindung ist das flexible Kopplungselement des Rückhaltesystems drehbeweglich am Fahrerhaus befestigt. Eine drehbewegliche Befestigung kann beispielsweise über Drehzapfen erfolgen, die an dem Fahrerhaus montiert sind. Die drehbewegliche Befestigung erlaubt einerseits eine ungehinderte Kippbewegung des Fahrerhauses und andererseits wird die Befestigung im Falle einer Kollision nur auf Zug in Richtung des schräg nach unten verlaufenden Kopplungselements beansprucht, so dass eine übermäßige Belastung der Befestigungselemente und die Gefahr eines Abreißens vermieden werden.

Nach einer weiteren vorteilhaften Ausgestaltung der Erfindung sind zwischen dem Fahrerhaus und dem Kopplungselement Energie absorbierende Crashelemente vorgesehen. Wenn das Kopplungselement im Fall einer Kollision auf Zug beansprucht wird, stellt sich zunächst eine zugfeste, mechanische Kopplung zwischen dem Antriebsstrang und dem Fahrerhaus ein. Bei sehr großen Kräften, welche durch das Kopplungselement nicht mehr aufgenommen werden können, verformen sich die Crashelemente ab einem bestimmten Wert und vernichten die eingeleitete Überschuss-Energie. Dadurch wird ein Abreißen des flexiblen

Kopplungselements auch bei sehr großen Kräften verhindert und die Verbindung Fahrerhaus/Antriebsstrang bleibt aufrechterhalten. Auf diese Weise können auch höhere Aufprallgeschwindigkeiten mit dem Rückhaltesystem beherrscht werden. Die Crashelemente können dabei jede dem Fachmann hierfür bekannte Form aufweisen und beispielsweise als Verformungskörper, aktive Energie absorbierende Elemente oder ähnlichem realisiert sein. Alternativ kann das Kopplungselement selbst eine Dehnungsfähigkeit aufweisen, um durch seine Verformung Energie zu vernichten.

Vorteile und Merkmale der Erfindung sind in der nachfolgenden detaillierten Beschreibung erläutert, in welcher die Erfindung mehr im Detail in Bezug auf die in der beigefügten Zeichnung dargestellten Ausführungsbeispiele beschrieben wird.

In der Zeichnung zeigen:
- Fig. 1: eine schematische Seitenansicht eines ersten Aus- führungsbeispiels eines erfindungsgemäßen Last- kraftwagens mit einem Kollisions-Rückhaltesystem in Form eines Halteseils;
- Fig. 2: eine schematische Draufsicht des Ausführungsbei- spiels der Fig. 1; und
- Fig. 3: eine schematische Seitenansicht eines zweiten Aus- führungsbeispiels eines erfindungsgemäßen Last- kraftwagens.

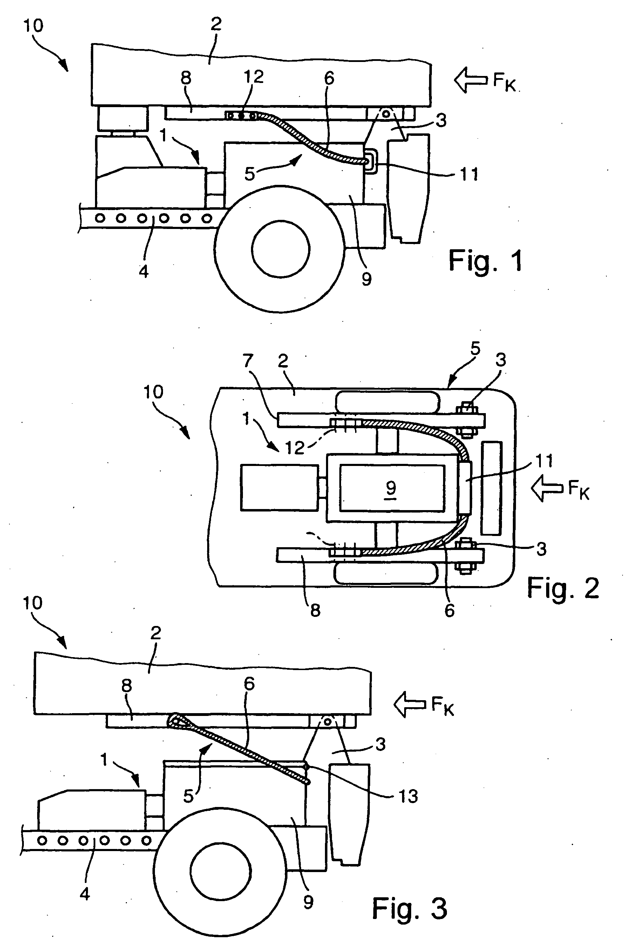

Die Figur 1 zeigt in einer schematischen Seitenansicht ein erstes Ausführungsbeispiel eines Lastkraftwagens mit einem Rückhaltesystem 5 für das Fahrerhaus 2. Das Rückhaltesystem 5 dient einem Verankern des Fahrerhauses 2 im Falle von frontalen Kollisionen des Lastkraftwagens 10 mit Hindernissen auf Höhe des Fahrerhauses 2, wie es mit dem Kräftepfeil F_{K} dargestellt ist. Um zu verhindern, dass in solchen Fällen die gesamte Kollisions-Energie vom Fahrerhaus 2 aufgenommen werden muss, ist neben den normalen Anbindungspunkten des Fahrerhauses, wie der Lagerung 3, eine zusätzliche mechanische Kopplung in Form eines Rückhaltesystems 5 vorgesehen, das ein flexibles Kopplungselement 6 umfasst, welches eine entgegen der Fahrtrichtung zugfeste Verbindung zwischen dem Fahrerhaus 2 und einem vorderen festen Teil des Antriebsstrangs 1 bildet. Das Rückhaltesystem 5 besteht bei dieser Ausführungsform aus einem Halteseil 6, das am Fahrerhaus 2 über Schrauben 12 und am vorderen Ende eines Antriebsmotors 9 über eine Führung 11 befestigt ist. Das Halteseil 6 ist mit seinen Enden jeweils in einem hinteren Bereich von Seitenlängsträgern 7, 8 eines Fahrerhaus-Chassis durch drei Schrauben 12 und einem Befestigungsflansch fest verschraubt. Auf Seiten des Motors 9 wird das Halteseil 6 in einer rohrförmigen Führung 11 gehalten, durch welche es hindurchgeführt ist. Die Führung 11 bildet eine unverlierbare und drehbewegliche Lagerung des Halteseils 6 auf Höhe des Zylinderkopfes des Antriebsmotors 9, also einem Bereich großer Festigkeit. Hierdurch wird das Fahrerhaus 2 im Falle einer frontalen Kollision des Lastkraftwagens an einem hochstabilen Bereich des Antriebsstrangs 1 durch das Halteseil 6 abgestützt. Die auf das Fahrerhaus 2 einwirkenden Kräfte F_{K} werden auf den tiefer liegenden, stabilen Bereich des Antriebsstrangs 1 übertragen und von diesem aufgenommen bzw. abgeleitet. Das flexible Kopplungselement 6 bzw. Halteseil hat den Vorteil, dass eine Überbrückung des hoch gelegenen Fahrerhauses 2 mit dem tiefer liegenden Antriebsstrang 1 möglich ist, ohne dass die Kippbeweglichkeit des Fahrerhauses 2 oder die erforderliche, freie Schwingung des Antriebsmotors 9 beeinträchtigt werden. Die Flexibilität des Kopplungselements 6 erlaubt ferner einen jeweils individuell angepassten Verlauf je nach den räumlichen Gegebenheiten. Das Kopplungselement ist bei diesem Ausführungsbeispiel ein durchgehendes Halteseil 6. Es kann jedoch auch aus mehreren Seilabschnitten bestehen, die durch jeweilige Zwischenglieder miteinander verbunden sind. Alternativ zu einem Halteseil 6 können als Kopplungselement auch Gurte, Ketten oder andere zugfeste, flexible Bauteile eingesetzt werden. Die stirnseitige Führung 11 für das Halteseil 6 am Motor 9 ist hier in Form eines im Querschnitt rechteckigen Aufnahmerohrs realisiert, durch welches das Halteseil hindurchgeht. Andere Möglichkeiten einer Fixierung des Halteseils 6 können ebenso in Betracht gezogen werden.

In der Figur 2 ist das Ausführungsbeispiel der Figur 1 in einer schematischen Draufsicht dargestellt. Hieraus ist der U-förmige Verlauf des Halteseils 6 um die Stirnseite des Antriebsmotors 9 herum ersichtlich. Die seitlichen Längsträger 7, 8 des Chassis des Fahrerhauses 2 sind jeweils rechts und links des darunter liegenden Antriebsstrangs 1 angeordnet. Ausgehend von endseitigen Befestigungen mittels Schrauben 12 verläuft das Halteseil 6 schräg nach vorne unten und ist über einen Querabschnitt an der Vorderseite des Antriebsstrangs 1 eingehakt. Die Kipp-Lagerung 3 des Fahrerhauses 2 ist hier in der gleichen Ausrichtung wie die vordere Führung 11 des Halteseils 6 vorgesehen. Dadurch schwenkt das Halteseil 6 im Wesentlichen um eine gemeinsame Achse mit dem Fahrerhaus 2 beim Kippen desselben.

In Figur 3 ist eine alternative Ausführungsform eines Rückhaltesystems 5 in einer Seitenansicht dargestellt. Das Halteseil 6 weist hier zur Befestigung an den Längsträgern 7, 8 Halteschlaufen auf, die in Bolzen an den Längsträgern 7, 8 eingehängt sind. Dadurch ist die Befestigung auch auf Seiten des Fahrerhauses 2 drehbeweglich, wodurch sich das Halteseil 6 der jeweiligen Ausrichtung anpassen kann. Das Halteseil 6 befindet sich bei einer Zugbelastung im Crashfall somit in einer optimal ausgerichteten Lage und es entstehen keine me chanischen Schwachstellen aufgrund einer Abwinklung an den Befestigungspunkten. Zur Führung des Halteseils 6 an der Vorderseite des Antriebsmotors 9 sind hier seitlich vorragende Haltebolzen 13 vorgesehen, die ein Abrutschen des Seils 6 nach oben auf konstruktiv einfache Weise verhindern. Das Rückhaltesystem 5 für das Fahrerhaus 2 kann auch eine Kopplung zwischen dem Fahrerhaus 2 und einem anderen Teil des Antriebsstrangs 1, wie zum Beispiel dem Getriebe oder der Motorlagerung vorsehen. Die Befestigung des flexiblen Kopplungselements 6 kann anstatt an den Längsträgern 7, 8 des Fahrerhauses 2 an anderen festen Strukturbauteilen des Fahrerhauses 2 erfolgen.

## Patentansprüche

1. Lastkraftwagen (10) mit einem über einem Antriebsstrang (1) kippbar gelagerten Fahrerhaus (2), welches mittels einer Lagerung (3) an einem bodenseitigen Fahrwerk-Chassis (4) angelenkt ist, wobei der Antriebsstrang (1) an dem Fahrwerk-Chassis (4) befestigt ist, und mit einem Rückhaltesystem (5) für das Fahrerhaus (2) im Falle von frontalen Kollisionen des Lastkraftwagens (10) mit einem Hindernis auf Höhe des Fahrerhauses (2) zur Aufnahme und Ableitung von Kollisionskräften seitens des Fahrerhauses (2),
**dadurch gekennzeichnet,**
**dass** das Rückhaltesystem (5) ein flexibles Kopplungselement (6) umfasst, das zwischen dem Fahrerhaus (2) und einem vorderen festen Teil des darunter liegenden Antriebsstrangs (1) eine entgegen der Fahrtrichtung zugfeste Verbindung herstellt, wobei das Kopplungselement (6) eine Biegefreiheit aufweist, welche ein freies Kippen des Fahrerhauses (2) um die Lagerung (3) erlaubt, so dass im Betriebszustand die Möglichkeit des Fahrerhauskippens sowie die Eigenbeweglichkeit des Fahrerhauses (2) und des Antriebsstranges (1) durch das flexible Kopplungselement (6) nicht beeinflusst werden.

2. Lastkraftwagen (10) nach Anspruch 1,
**dadurch gekennzeichnet, dass**
das Kopplungselement (6) an Seitenlängsträgern (7, 8) des Fahrerhauses (2) befestigt ist.

3. Lastkraftwagen (10) nach Anspruch 1 oder 2,
**dadurch gekennzeichnet, dass**
das Kopplungselement (6) an einem stirnseitigen Bereich eines Antriebsmotors (9) fixiert ist.

4. Lastkraftwagen (10) nach einem der vorangegangenen Ansprüche,
**dadurch gekennzeichnet, dass**
das flexible Kopplungselement (6) ein U-förmig den Antriebsmotor (9) umschlingendes Halteseil ist, welches mit seinen Enden an den Seitenlängsträgern (7, 8) befestigt ist.

5. Lastkraftwagen (10) nach einem der vorangegangenen Ansprüche,
**dadurch gekennzeichnet, dass**
das Kopplungselement (6) mittels einer Führung (11) auf Seiten des Antriebsstrangs (1) drehbeweglich und unverlierbar befestigt ist.

6. Lastkraftwagen (10) nach einem der vorangegangenen Ansprüche,
**dadurch gekennzeichnet, dass**
das Kopplungselement (6) am Fahrerhaus (2) drehbeweglich befestigt ist.

7. Lastkraftwagen(10) nach einem der vorangegangenen Ansprüche,
**dadurch gekennzeichnet, dass**
Energie absorbierende Crashelemente zwischen dem Kopplungselement (6) und dem Fahrerhaus (2) vorgesehen sind.

8. Lastkraftwagen (10) nach einem der vorangegangenen Ansprüche,
**dadurch gekennzeichnet, dass**
das flexible Kopplungselement (6) ein Stahlseil ist.

9. Lastkraftwagen (10) nach einem der vorangegangenen Ansprüche,
**dadurch gekennzeichnet, dass**
das Kopplungselement (6) zur Energievernichtung dehnbar ist.

## Claims

1. Lorry (10) with a cab (2) which is tiltably mounted above a drive train (1) and hinged to a bottom chassis (4) by means of a mounting (3), the drive train (1) being attached to the chassis (4), and with a restraint system (5) for the cab (2) in case of a frontal collision between the lorry (10) and an obstacle at the level of the cab (2) for absorbing and dissipating collision forces on the part of the cab (2),
**characterised in that**
the restraint system (5) comprises a flexible coupling element (6) which provides a connection which is resistant to tensile stress against the direction of travel between the cab (2) and a fixed front part of the drive train (1) located underneath the cab (2), the coupling element (6) having a flexural freedom which permits a free tilting of the cab (2) about the mounting (3), so that, in the operating state, the possibility of the tilting of the cab and the intrinsic mobility of the cab (2) and the drive train (1) are not affected by the flexible coupling element (6).

2. Lorry (10) according to claim 1,
**characterised in that**
the coupling element (6) is attached to side members (7, 8) of the cab (2).

3. Lorry (10) according to claim 1 or 2,
**characterised in that**
the coupling element (6) is secured to an end region of a drive engine (9).

4. Lorry (10) according to any of the preceding claims,
**characterised in that**
the flexible coupling element (6) is a retaining cable which is wrapped around the drive engine (9) in a U-shape, its free ends being attached to the side members (7, 8).

5. Lorry (10) according to any of the preceding claims,
**characterised in that**
the coupling element (6) is rotatably and captively attached by means of a guide (11) on the sides of the drive train (6).

6. Lorry (10) according to any of the preceding claims,
**characterised in that**
the coupling element (6) is rotatably attached to the cab (2).

7. Lorry (10) according to any of the preceding claims,
**characterised in that**
energy-absorbing crash elements are provided between the coupling element (6) and the cab (2).

8. Lorry (10) according to any of the preceding claims,
**characterised in that**
the flexible coupling element (6) is a steel cable.

9. Lorry (10) according to any of the preceding claims,
**characterised in that**
the coupling element (6) can be stretched to destroy energy.

## Revendications

1. Camion (10) pourvu d'une cabine (2) de conducteur montée basculante au-dessus d'un ensemble transmission (1), qui est reliée de manière articulée à l'aide d'un support (3) à un châssis (4) situé du côté du sol, l'ensemble transmission (1) étant fixé au châssis (4), d'un système de retenue (5) pour la cabine (2) du conducteur, en cas de collision frontale du camion (10) avec un obstacle à la hauteur de la cabine (2) du conducteur, pour absorber et dévier les forces de collisions latéralement par rapport à la cabine (2) du conducteur, **caractérisé en ce que** le système de retenue (5) comporte un élément de couplage souple (6) qui produit une liaison résistant à l'extension dans le sens contraire au sens de roulement entre la cabine (2) du conducteur et une partie fixe avant de l'ensemble transmission (1) située en dessous, l'élément d'accouplement (6) présente une aptitude au pliage qui permet un basculement libre de la cabine (2) du conducteur autour du support (3) de manière telle que dans un état de fonctionnement la possibilité de basculement de la cabine du conducteur et la mobilité intrinsèque de la cabine (2) du conducteur et de l'ensemble transmission (1) ne soient pas affectés par l'élément d'accouplement flexible (6).

2. Camion (10) selon la revendication 1, **caractérisé en ce que** l'élément d'accouplement (6) est fixé aux longerons latéraux (7, 8) de la cabine (2) du conducteur.

3. Camion (10) selon la revendication 1 ou 2, **caractérisé en ce que** l'élément d'accouplement (6) est fixé dans la zone frontale d'un moteur d'entraînement (9).

4. Camion (10) selon l'une quelconque des revendications précédentes, **caractérisé en ce que** l'élément d'accouplement (6) flexible est un câble de retenue entourant en forme de U le moteur d'entraînement (9) dont les extrémités sont fixés aux longerons latéraux (7, 8),

5. Camion (10) selon l'une quelconque des revendications précédentes, **caractérisé en ce que** l'élément d'accouplement (6) est fixé de manière imperdable et mobile en rotation au moyen d'un guide (11) sur les côtés de l'ensemble transmission (1).

6. Camion (10) selon l'une quelconque des revendications précédentes, **caractérisé en ce que** l'élément d'accouplement (6) est fixé mobile en rotation sur la cabine (2) du conducteur.

7. Camion (10) selon l'une quelconque des revendications précédentes, **caractérisé en ce que** des éléments d'absorption d'énergie en cas de collision sont prévus entre l'élément d'accouplement (6) et la cabine (2) du conducteur.

8. Camion (10) selon l'une quelconque des revendications précédentes, **caractérisé en ce que** l'élément d'accouplement (6) flexible est un câble en acier.

9. Camion (10) selon l'une quelconque des revendications précédentes, **caractérisé en ce que** l'élément d'accouplement (6) est extensible et destiné à absorber l'énergie libérée lors d'une collision.
